(19) Europäisches Patentamt

European Patent Office

Office européen des brevets

(11) **EP 0 971 012 B1**

(12) **FASCICULE DE BREVET EUROPEEN**

(45) Date de publication et mention
de la délivrance du brevet:
**13.10.2004 Bulletin 2004/42**

(51) Int Cl.⁷: **C09K 3/32**, B09C 1/00,
C02F 1/68

(21) Numéro de dépôt: **99401674.9**

(22) Date de dépôt: **05.07.1999**

(54) **Utilisation d'esters d'huiles en tant que produit de lavage d'une surface polluée par des hydrocarbures**

Verwendung von Esterölen als Reinigungsmittel für ölverschmutzte Oberflächen

Use of esters of oils for cleaning surfaces contaminated with hydrocarbons

(84) Etats contractants désignés:
**BE ES GB IT NL**

(30) Priorité: **07.07.1998 FR 9808727**

(43) Date de publication de la demande:
**12.01.2000 Bulletin 2000/02**

(73) Titulaire: **Institut Français du Pétrole**
**92852 Rueil-Malmaison Cedex (FR)**

(72) Inventeurs:
• **Dalmazzone, Christine**
**78000 Versailles (FR)**
• **Hillion, Gérard**
**95220 Herblay (FR)**

(56) Documents cités:
**EP-A- 0 591 019      EP-A- 0 785 010**
**FR-A- 2 208 706      GB-A- 1 557 182**

• **CHEMICAL ABSTRACTS, vol. 121, no. 2, 11 juillet 1994 (1994-07-11) Columbus, Ohio, US; abstract no. 17613, SULEJMANOV, ALEKPER B. ET AL: "Composition for treating water surface to remove oil spills" XP002097411 & SU 1 803 418 A (STATE SCIENTIFIC-RESEARCH AND DESIGN INSTITUTE FOR THE DEVELOPMENT OF)**

**Description**

L'invention concerne l'utilisation d'esters d'huiles, plus particulièrement les esters méthyliques ou éthyliques de palmiste, pour nettoyer les surfaces solides souillées par des hydrocarbures (sols, ouvrages et bâtiments, rochers, galets, par exemple).

L'art antérieur décrit plusieurs publications pour le traitement de surfaces d'eau polluées par des hydrocarbures. C'est ainsi que :

- FR 2 208 706 décrit une composition et un procédé pour émulsionner une huile comprenant :

  - un monoester de masse < 530 d'un acide carboxylique aliphatique et d'un polyoxyalcoylène glycol,
  - un monoester de masse > 530 d'un acide carboxylique aliphatique et d'un polyoxyalcoylène glycol,
  - et un solvant.

- CA vol. 121, n°2, 11 juillet 1994, (Abstract n° 17613) décrit une composition pour traiter la surface des eaux polluées par des hydrocarbures contenant de 10-20 % d'acides gras (de C11-C17) éthoxylés et 80-90 % d'acides gras (de 10-20) ethoxylés.
- GB 1557 187 décrit une composition pour disperser du pétrole comprenant des mélanges d'esters d'acides carboxyliques et de diéthylène glycol ou de polyoxyéthylène glycol.

Toutes ces compositions sont plus ou moins toxiques car elles peuvent comprendre à l'issue de leur préparation des traces d'oxyde d'éthylène. Elles sont utilisées pour traiter des surfaces d'eau par dispersion ou émulsion.

Les produits de lavage les plus efficaces couramment utilisés pour nettoyer les surfaces solides polluées par des hydrocarbures peuvent être des solvants pétroliers (coupes hydrocarbures composées de mélanges de n-paraffines, iso-paraffines, cycloparaffines et aromatiques). Ces solvants peuvent être utilisés purs ou en mélange avec des tensio-actifs, selon que l'on souhaite ou non émulsifier ou disperser le produit polluant.

Par exemple, en cas de lavage de rochers en bordure de mer, on peut souhaiter récupérer les hydrocarbures après nettoyage : on utilisera alors de préférence des solvants purs. Si, par contre, la zone concernée est trop agitée et difficile d'accès, on utilisera des mélanges solvants/tensio-actifs afin de favoriser la dispersion des hydrocarbures dans le milieu marin et améliorer la biodégradation par les micro-organismes.

A l'heure actuelle, les contraintes environnementales de plus en plus sévères font que l'on recherche des produits de moins en moins toxiques et à fort potentiel de biodégradabilité, mais qui conservent cependant une très grande efficacité.

On a remarqué la possibilité d'utiliser au moins un ester résultant de la réaction d'un alcool de 1 à 4 atomes de carbone et d'un acide gras de 6 à 24 atomes de carbone en tant que produit de lavage d'une surface minérale, végétale ou animale, souillée par des hydrocarbures. Avec des esters dont les acides gras proviennent d'une huile de palmiste, de palme et/ou de coprah, d'origine naturelle, biodégradables et non toxiques, on a obtenu d'excellents résultats au niveau du lavage des surfaces souillées par des hydrocarbures. Avantageusement, les alcools entrant dans la synthèse desdits esters selon l'invention sont le méthanol et surtout l'éthanol qui est encore moins toxique. L'alcool n-butylique, isobutylique ou terbutylique, le n-propanol ou l'isopropanol peuvent aussi être utilisés.

Pour nettoyer une surface souillée par des hydrocarbures, on applique en règle générale le produit de lavage, de préférence par pulvérisation, le plus uniformément possible sur toute la surface concernée. On laisse agir quelques minutes (en général, 5 à 10 minutes suffisent) et on lave avec un jet d'eau sous pression.

Ledit ester peut être utilisé seul. On peut aussi utiliser un mélange de ces esters d'huiles préparés industriellement par fractionnement.

D'autres esters résultant de la réaction avec d'autres huiles peuvent être utilisés. C'est le cas notamment avec le suif, le saindoux, l'huile d'arachide, de soja, de maïs, de colza, de coton, de tournesol et/ou les huiles industrielles de fritures après usage.

Les esters selon l'invention peuvent par ailleurs être utilisés à une température comprise entre la température ambiante et une température inférieure à la température de stabilité du mélange d'esters considérés.

Leur mode d'utilisation dépendra de la nature du polluant. Selon un premier mode d'utilisation, pour traiter des coupes lourdes d'hydrocarbures (fuels lourds ou huiles moteur par exemple), on pourra utiliser de préférence des mélanges d'esters provenant d'acides à courtes chaînes (nombre d'atomes de carbone de l'acide majoritaire inférieur à 16). Selon un deuxième mode d'utilisation, on pourra choisir des esters d'huile dans laquelle l'acide oléique ($C_{18}$) est prédominant, pour traiter des coupes moins lourdes, l'huile de colza par exemple.

Les esters selon l'invention peuvent être mélangés à au moins un composé tensio-actif, de préférence anionique et/ou non ionique, pour disperser le polluant.

Le choix des tensio-actifs utilisés pour disperser le polluant dépend en général du mode d'utilisation :

- Si on les introduit dans le mélange d'esters, on choisira des composés tensio-actifs lipophiles de HLB par exemple inférieur à 10. On pulvérise donc le mélange esters/tensio-actifs sur la surface souillée, puis on rince à l'eau.
- Si on les ajoute à l'eau lors de la phase de rinçage, on choisira des composés tensio-actifs hydrophiles de HLB par exemple supérieur à 10. On pulvérise alors lesdits esters sur la surface souillée et on rince avec le mélange eau-tensio-actifs.

On peut introduire avantageusement de 1 à 10% du composé tensio-actif par rapport à la phase dans laquelle il est solubilisé.

A titre d'exemple, on peut utiliser, avantageusement, le sulfate, le sulfonate ou sulfosuccinate de métal alcalin, en particulier le dioctylsulfosuccinate de sodium comme tensioactif anionique. Des alcools gras éthoxylés ou oxypropylénés, des esters de sorbitan ou des esters de sorbitan éthoxylés peuvent aussi utilisés comme tensioactifs non ioniques

On peut préparer les esters méthyliques des huiles citées par transestérification en présence d'un catalyseur basique. La préparation d'esters d'huiles végétales par transestérification avec de l'éthanol, du propanol, de l'isopropanol, du butanol ou de l'isobutanol est beaucoup plus difficile qu'à partir du méthanol. Pour ces alcools, il est préférable d'estérifier par catalyse acide les acides gras correspondants. La catalyse d'estérification d'acides gras est couramment pratiquée dans l'industrie et utilise généralement comme catalyseurs des acides forts comme l'acide chlorhydrique, sulfurique ou des acides sulfoniques du type benzène ou paratoluène sulfonique, ainsi que des résines échangeuses d'ions, selon [H. Hock, K. Gänicke, Ber, 71, 1430-1437 (1938)].

Les exemples suivants illustrent l'invention:

**Description du test d'efficacité de lavage :** ce test est basé sur le test de lavage utilisé par le CEDRE (Centre de documentation, de recherche et d'expérimentations sur les pollutions accidentelles des eaux, Plouzané, France) pour la recommandation des produits de lavage pouvant être utilisés pour nettoyer les rochers souillés sur le littoral (The new french approval procedure for shoreline cleaning agents, F.X. Merlin, P. Le Guerroue, Proceedings of the 17th AMOP, p 943-950, Vancouver, 8-10 June 1994, Environment Canada, Ottawa, Ontario). Ce test est effectué sur des lames de verre (40 x 80 mm) polluées avec du fuel lourd n°2 (viscosité à 50°C : 430 centistokes; à 100°C : 39 centistokes). Le fuel lourd est d'abord réchauffé à 50°C pour diminuer sa viscosité. On dépose ensuite environ 0,5 g pesés précisément sur la lame de façon uniforme à l'aide d'un petit rouleau. On laisse ensuite reposer pendant au moins 4 heures. Pour le lavage des lames de verre, on pulvérise le produit de nettoyage le plus uniformément possible sur toute la surface salie, à raison d'environ 0,25g pesés précisément. On laisse agir 10 minutes et on lave à l'eau sous pression à l'aide d'une pompe équipée d'une buse Teejet 9520, à un débit de 100 l/h en sortie de buse. La distance entre la buse et la lame placée verticalement est de 7 cm et on effectue 38 allers-retours sur toute la longueur de la lame pendant 20 secondes. Chaque produit est testé sur au moins trois lames. La masse de fuel restant sur la lame après le lavage est récupérée à l'aide d'un solvant (par exemple, du dichlorométhane) et est quantifiée par colorimétrie. L'efficacité de lavage est exprimée de la façon suivante :

$$E\ (\%) = [(m_0-m)/m_0]x100$$

avec $m_0$ = masse de fuel initiale et m = masse de fuel restant sur la lame

On vérifie pour chaque série d'essais avec une lame témoin lavée à l'eau seule que l'efficacité de lavage est nulle en absence de produit.

**Exemple 1 :** Préparation des esters méthyliques d'huiles

La méthode de préparation d'un ester méthylique d'huile de palmiste est la suivante :

On part d'une huile de palmiste dont les caractéristiques sont les suivantes :

d = 0,903-0,908
$PM_{moyen}$ = 700
Indice de saponification = 246-254
Indice d'iode = 12-19
Indice d'acide < 1
Insaponifiables = 0,3-0,5% poids
Indice de péroxydes = 9-11 mmoles/kg
Titre = 25-29°

| Composition (exprimée en % poids) : | | |
|---|---|---|
| Acide caproïque | $C_{6:0}$ | <1 |
| Acide caprylique | $C_{8:0}$ | 4 |
| Acide caprique | $C_{10:0}$ | 3 |
| Acide laurique | $C_{12:0}$ | 47 |
| Acide myristique | $C_{14:0}$ | 16 |
| Acide palmitique | $C_{16:0}$ | 8 |
| Acide stéarique | $C_{18:0}$ | 3 |
| Acide oléique | $C_{18:1}$ | 16 |
| Acide linoléique | $C_{18:2}$ | 3 |

Dans un ballon de 2 litres, on introduit 1000 g d'huile de palmiste raffinée et 270 g de méthanol absolu. On chauffe à 65°C. On prépare une solution catalytique en solubilisant 4,5 g de NaOH en écailles dans 45 g de méthanol absolu. On introduit 70%, soit 34,65 g de la solution catalytique dans le mélange agité huile/méthanol à 65°C. On laisse réagir 20 minutes en laissant monter la température jusqu'à 70°C, puis on introduit le reste de la solution catalytique. On maintient la température à 70°C et l'agitation pendant 1 heure. On laisse décanter dans une ampoule à décanter régulée à 60°C. Après 15 minutes, on soutire 198 g d'une solution glycérine/méthanol, puis on lave avec 30 g d'eau en agitant pendant 5 minutes. On décante 15 minutes à 60°C. On soutire la phase aqueuse inférieure, riche en méthanol et contenant de la glycérine et du catalyseur basique. On répète l'opération de lavage 3 fois. L'ester est finalement séché sous vide à 120°C pour éliminer les traces d'eau et de méthanol. On obtient 992 g d'ester méthylique d'huile de palmiste à 98% au moins de pureté.

Le même mode opératoire est utilisé pour transformer tous types d'huiles en esters méthyliques.

**Exemple 2 :** Comparaison entre un produit du commerce (recommandé par le CEDRE) et le produit selon l'invention (test de lavage effectué à 30°C)

| Produit de lavage | Efficacité (%) à 30°C |
|---|---|
| Ketrul 210 (Total Solvants) | 70 |
| Esters méthyliques de palmiste | 88 |

Le produit selon l'invention est donc bien plus efficace.

**Exemple 3 :** Efficacité de différents esters méthyliques et éthyliques (test de lavage à 20°C)

| Produits | Efficacité (%) à 20°C |
|---|---|
| Esters méthyliques de colza | 48 |
| Mélange esters méthyliques de colza (65%) et esters méthyliques de palmiste (35%) | 60 |
| Laurate de méthyle (pureté 98%) | 77 |
| Esters méthyliques de palme | 72 |
| Esters méthyliques de coprah | 81 |
| Esters méthyliques de palmiste | 80 |
| Esters éthyliques de palmiste | 81 |
| Esters éthyliques de palme | 74 |
| Esters éthyliques de colza | 47 |

## EP 0 971 012 B1

**Revendications**

1. Utilisation d'au moins un ester résultant de la réaction d'un alcool de 1 à 4 atomes de carbone et d'un acide gras de 6 à 24 atomes de carbone en tant que produit de lavage d'une surface minérale, végétale ou animale, souillée par des hydrocarbures.

2. Utilisation selon la revendication 1 dans laquelle l'alcool est le méthanol ou l'éthanol.

3. Utilisation selon la revendication 1 ou 2, dans laquelle le ou les acides gras proviennent de l'huile de palmiste, de palme, de coprah, de colza, d'arachide, de soja, de maïs, de coton, de tournesol, du suif, du saindoux et/ou de mélanges d'huiles industrielles de fritures usagées.

4. Utilisation selon l'une des revendications 1 à 3, dans laquelle ledit ester est utilisé seul.

5. Utilisation selon l'une des revendications 1 à 3, dans laquelle on utilise un mélange desdits esters.

6. Utilisation selon l'une des revendications 3 à 5, dans laquelle les acides gras proviennent de l'huile de palmiste, de palme et/ou de coprah.

7. Utilisation selon l'une des revendications 5 à 7, dans laquelle ledit ester est mélangé à au moins un composé tensio-actif, de préférence anionique et/ou non ionique, pour disperser le polluant.

8. Utilisation selon l'une des revendications 1 à 7, dans laquelle ledit ester, ou le mélange d'esters et de composé tensio-actif, est pulvérisé sur ladite surface, puis on rince à l'eau.

9. Utilisation selon l'une des revendications 1 à 7, dans laquelle ledit ester ou le mélange d'esters est pulvérisé sur ladite surface, puis on rince avec une solution contenant de l'eau et du composé tensio-actif.

10. Utilisation selon l'une des revendications 7 à 9, dans laquelle la proportion de tensio-actif est de 1 à 10% dans la phase dans laquelle le tensioactif est solubilisé.


**Patentansprüche**

1. Verwendung wenigstens eines Esters stammend aus der Reaktion eines Alkohols mit 1 bis 4 Kohlenstoffatomen und einer Fettsäure mit 6 bis 24 Kohlenstoffatomen in der Eigenschaft als Mittel zur Reinigung einer durch Kohlenwasserstoffe verunreinigten mineralischen, pflanzlichen oder tierischen Oberfläche.

2. Verwendung gemäß Anspruch 1, bei der der besagte Alkohol Methanol oder Ethanol ist.

3. Verwendung gemäß Anspruch 1 oder 2, bei der die Fettsäure oder die Fettsäuren aus dem Öl der Palmiste, dem Palmöl, dem Kopra-Öl, dem Rapsöl, dem Erdnussöl, dem Sojaöl, dem Maisöl, dem Baumwoll-Öl, dem Sonnenblumenöl, dem Talgöl, dem Schweineschmalzöl und/oder aus Mischungen industriellem benutzen Frittier-Öl stammen.

4. Verwendung gemäß einem der Ansprüche 1 bis 3, bei der besagter Ester allein verwendet wird.

5. Verwendung gemäß einem der Ansprüche 1 bis 3, bei der man eine Mischung der genannten Ester verwendet.

6. Verwendung gemäß einem der Ansprüche 3 bis 5, bei der die Fettsäuren aus dem Öl der Palmiste, dem Palmöl und/oder dem Kopra-Öl stammen.

7. Verwendung gemäß einem der Ansprüche 5 bis 7, bei der besagter Ester zu wenigstens einer oberflächenaktiven Substanz zugemischt wird, die vorzugsweise anionisch und/oder nicht ionisch ist, um die Verunreinigung zu dispergieren.

8. Verwendung gemäß einem der Ansprüche 1 bis 7, bei der besagter Ester oder die Mischung aus Estern und die oberflächenaktive Verbindung auf die besagte Oberfläche pulverisiert wird, dann spült man mit Wasser.

**9.** Verwendung gemäß einem der Ansprüche 1 bis 7, bei der besagter Ester oder die Mischung aus Estern auf die besagte Oberfläche pulverisiert wird, dann spült man mit einer Lösung enthaltend Wasser und die oberflächenaktive Substanz.

**10.** Verwendung gemäß einem der Ansprüche 7 bis 9, bei der der oberflächenaktive Anteil 1 bis 10 % in der Phase beträgt, in der die oberflächenaktive Substanz gelöst ist.

**Claims**

**1.** Use of at least one ester resulting from the reaction of an alcohol with 1 to 4 carbon atoms and a fatty acid with 6 to 24 carbon atoms as a product for washing an animal, vegetable or mineral surface, soiled by hydrocarbons.

**2.** Use according to claim 1, in which the alcohol is methanol or ethanol.

**3.** Use according to claim 1 or 2, in which the fatty acid or acids originate from palm-kernel, palm, copra, rape, groundnut, soybean, maize, cotton, sunflower oil, tallow, lard and/or mixtures of industrial oils from used cooking fats.

**4.** Use according to one of claims 1 to 3, in which said ester is used alone.

**5.** Use according to one of claims 1 to 3, in which a mixture of said esters is used.

**6.** Use according to one of claims 3 to 5, in which the fatty acids originate from palm-kernel, palm and/or copra oil.

**7.** Use according to one of claims 5 to 7, in which said ester is mixed with at least one surfactant compound, preferably anionic and/or non-ionic, for dispersing the pollutant.

**8.** Use according to one of claims 1 to 7, in which said ester, or the mixture of esters and surfactant compound, is sprayed over said surface, followed by rinsing with water.

**9.** Use according to one of claims 1 to 7, in which said ester, or the mixture of esters, is sprayed over said surface, followed by rinsing with a solution containing water and surfactant compound.

**10.** Use according to one of claims 7 to 9, in which the proportion of surfactant is 1 to 10% in the phase in which the surfactant is solubilized.